# EUROPEAN PATENT SPECIFICATION

(11) **EP 0 381 496 B1**
(45) Date of publication and mention of the grant of the patent: **02.06.1993**
(21) Application number: 90301052.8
(22) Date of filing: 01.02.1990
(51) Int. Cl.: B60G 11/113, B60G 11/42, B60G 11/04

(54) **Trailing arm suspension systems**
Radaufhängungssysteme mit einem Längslenker
Systèmes de suspension à bras oscillant longitudinal

(30) Priority: 03.02.1989 GB 8902446
(43) Date of publication of application: 08.08.1990
(73) Proprietor: MULTI-STROKE HANDBRAKE CONTROLS LIMITED, Tewkesbury Gloucestershire GL20 8HD (GB)
(72) Inventor: Foster, Peter Michael, Cockermouth, Cumbria CA13 9EZ (GB); Foster, Dorothy, Cockermouth, Cumbria CA13 9EZ (GB)
(74) Representative: Pacitti, Pierpaolo A.M.E.

(56) References cited:
- EP-A- 0 045 411
- CH-A- 342 482
- DE-A- 2 316 004
- DE-U- 1 813 405
- DE-U- 1 922 854
- FR-A- 565 444
- FR-A- 1 138 159

## Description

The present invention relates to trailing arm suspension systems of the type which are typically used on heavy goods vehicle trailers and semitrailers. Such trailers may be of single axle type or they may have two or more associated axles.

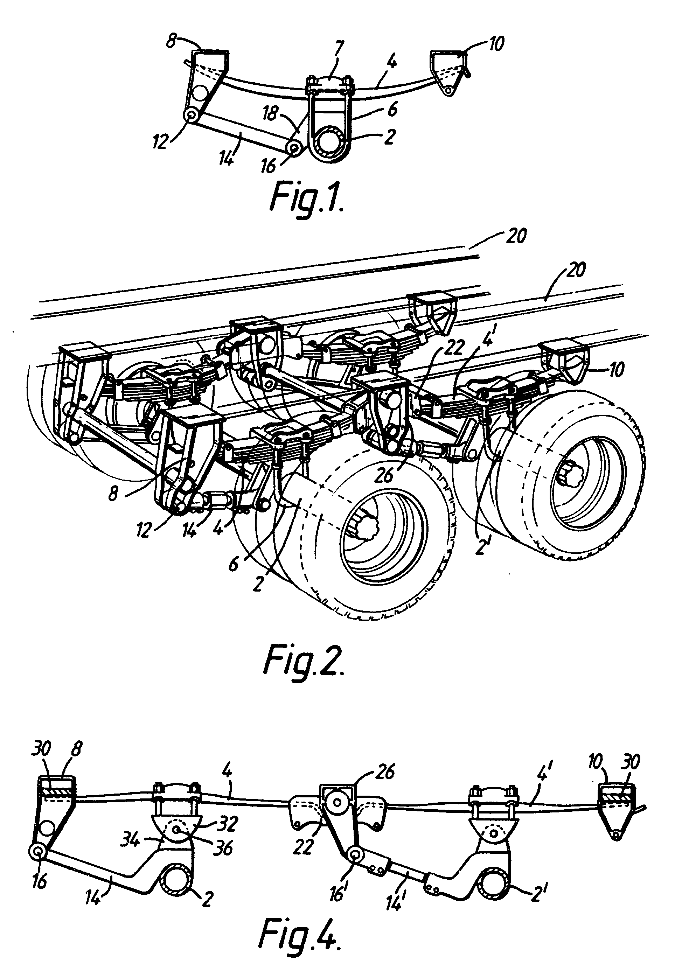

Figure 1 is a diagrammatic side elevation of the critical elements of a known single axle trailing arm suspension system. The single axle 2 carries at each end a wheel or wheels by means of a respective bearing which are not shown. Above each end of the axle 2 and spaced as far outboard as practicable is a leaf spring 4 which is rigidly clamped to the axle by a depending U-shaped bracket 6 and an associated clamping plate 7. The leading end of the leaf spring 4 bears onto and slides on a shaped seating which forms part of a fixed stool 8 which is rigidly connected to the vehicle chassis (not shown). The trailing end of the leaf spring 4 bears onto and slides on a similar seating afforded by a further stool 10 which is also rigidly connected to the vehicle chassis. The leading stool extends a short distance below the leaf spring and is connected at its lower end by means of a pivotal connection 12 to one end of a trailing arm 14 whose primary purpose is to locate the axle longitudinally with respect to the chassis. The other end of the trailing arm is connected by a pivotal connection 16 to a cranked bracket 18 which is rigidly connected to the axle adjacent the bracket 6.

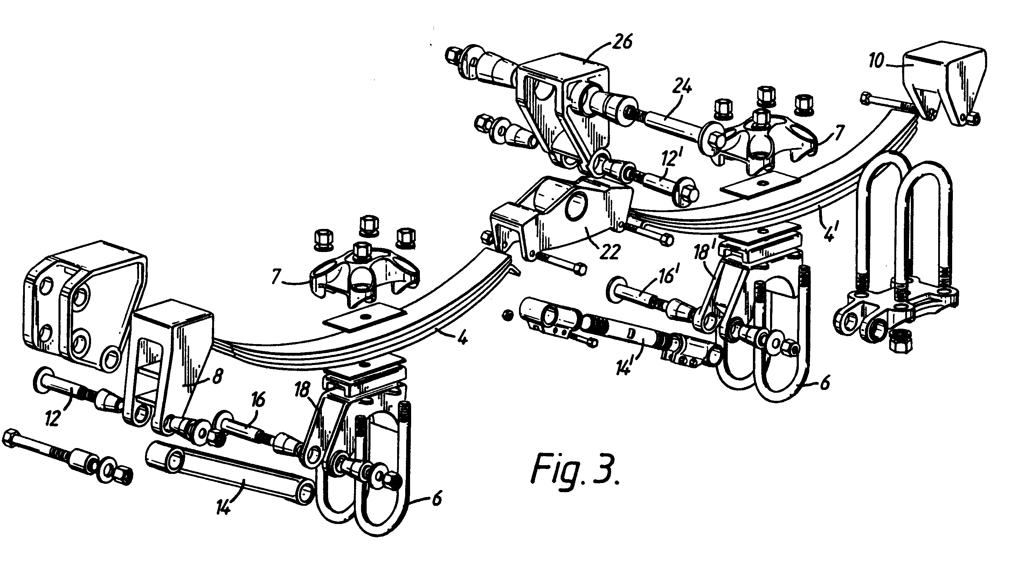

Figure 2 is a perspective view of a tandem axle suspension system of trailing arm type together with the associated portions of the vehicle or trailer and Figure 3 is an exploded view of the essential components of a similar suspension system. In this case there are two axles 2, each of which carries one or more wheels at each end. Between each associated pair of wheels the axle is rigidly connected to a respective leaf spring 4,4' by a bracket 6 and clamping plate 7. The leading end of the leading leaf spring 4 rests slidably on a seating afforded by a stool 8 which is rigidly fixed to the chassis 20 and to whose lower end a trailing arm 14 is pivotally connected by a pivot pin 12. The other end of the trailing arm 14 is pivotally connected by a pivot pin 16 to a bracket 18 which is connected to the leading axle. The trailing end of the leaf spring 4 slidably acts on a seat afforded by one end of a balance beam 22 which is mounted at its midpoint by a pivot 24 to pivot about a transverse axis within a stool 26 rigidly connected to the chassis.

The leading end of the trailing leaf spring 4' bears slidably on a seat afforded by the other end of the balance beam whilst its trailing end bears slidably on a seat afforded by a stool 10 rigidly connected to the chassis. A second trailing arm 14' is connected at its leading end by a pivot pin 12' to the stool 26 and at its trailing end by a pivot pin 16' to a bracket 18' which is fixed to the trailing axle.

In use, if there is a greater load on one axle than the other, this is exerted on the balance beam 22 which is thus caused to pivot and thus to transmit a proportion of the load differential through the balance beam to the other axle.

There are of course many variations on the constructions described above. In particular, there may be three or even more axles and in this event the leading ends of the leading leaf springs and the trailing ends of the trailing leaf springs bear on fixed stools and all the remaining leaf spring ends bear on balance beams disposed between the adjacent springs which are intended to equalise the load between the springs.

In a single axle suspension of the type described above the linearly resilient characteristics of the springs are inhibited as the axle loading increases by the very substantial sliding friction between the ends of the springs and the seats on the stools. Under fluctuating loads, e.g. due to an uneven road, the springs tend to move over their seats unevenly, i.e. in a series of discrete steps which results in a harsh ride. Under heavy breaking the applied torque results in the axle rotating about the trailing pivot axis 16 of the trailing arm until the wheel substantially leaves the ground whereupon it falls down again and the cycle is repeated. This is the familiar phenomenon of axle hop which is uncomfortable for the driver and also results in increased stopping distances and increased damage to the road due to the cyclical nature of the force applied to the road.

In a multiple axle suspension both the above described phenomena occur. It is also found that the load equalisation function of the balancing beams is only really effective when these beams are in or near their mid-range position, i.e. are substantially horizontal. In any other position the axle loads are markedly out of balance, the difference increasing with increasing rotation of the balance beams, the greater load being applied to that axle whose leaf spring is in contact with that end of the balance beam which is above the mid-range position. Accordingly, if a higher load is applied to one axle than the other(s) the balance beam(s) tilt(s) and the load on the axles is not adequately equalised. Furthermore, under heavy breaking not only does axle hop occur but all the springs are rotated by the braking torque and this results in the load being transferred rearwardly to the extent that the front axle may carry little or no load and the rear axle carries the major proportion of it. This frequently results in the rear axle temporarily carrying a load in excess of the prescribed limit and thus causing excessive damage to the road surface. It also results in the front axle contributing little or nothing to the braking force and thus in an increase in the braking distance.

It is thus an object of the present invention to provide a trailing arm suspension system which provides the vehicle with a ride which is substantially smoother than is currently the case and which is not subject to axle hop and thus has a shorter braking distance than is usual. It is a further object to provide a multiple axle suspension in which the load is substantially equally shared at all times between the axles whereby the braking performance is further enhanced and the peak axle load and thus the damage done to the road are substantially reduced.

According to one aspect of the present invention a single axle suspension system including a leaf spring which is connected to the axle, two stools which are connected to the chassis of the vehicle and which are slidably supported by respective ends of the leaf spring and a trailing arm which is pivotally connected to the leading stool or a member connected thereto and is connected to the axle or a member connected thereto is characterised in that the leaf spring is substantially straight, the trailing arm is rigidly connected to the axle or a member rigidly connected thereto and that the leaf spring is connected to the axle via a pivotal joint.

According to a further aspect of the present invention a multiple axle suspension system including two or more leaf springs which are connected to respective axles, two stools which are connected to the vehicle chassis and which are slidably supported by the leading end of the leading leaf spring and the trailing end of the trailing leaf spring, respectively, the remaining ends of the leaf springs being slidably supported by a respective end of one or more balance beams mounted on a respective further stool to pivot about an axis substantially parallel to the axles, and a respective trailing arm connected to each axle or a member connected thereto and to the stool ahead of it or a member connected thereto, is characterised in that each leaf spring is substantially straight, that each trailing arm is rigidly connected to the associated axle or a member rigidly connected thereto and that each leaf spring is connected to the associated axle via a pivotal joint.

The present invention thus embraces a suspension system with any number of axles which includes a substantially straight leaf spring connected to each axle via a respective pivotal joint and a trailing arm rigidly connected to the or each axle or a member rigidly connected thereto, the leading end of the leaf spring or the leading leaf spring and the trailing end of the leaf spring or the trailing leaf spring slidably engaging respective stools and the intermediate pairs of ends, if any, of the leaf springs being slidably supported by respective pivotally mounted balance beams.

Leaf springs of heavy vehicle suspension systems are conventionally arched with a relatively small radius of curvature. This inherently means that as the loading and attitude of the springs change, due to changes in chassis pitch or axle displacement, the ends of the springs move a considerable distance, typically up to 35mm, over the seats on the stools. The present invention is based on the recognition that this curvature of the springs is unnecessary and that if they are substantially flat or straight the linear movement of their ends can be substantially reduced to e.g. 2 or 3mm. This has the effect of "equalising" the axle loads to a markedly better extent. This also opens up the possibility of eliminating all sliding movement between the springs and stools and providing resilient blocks or pads, e.g. of elastomeric material, between the stools and the leaf springs which are arranged to accommodate all the substantially reduced relative movement of the springs and stools in deformation or shear of the resilient blocks which thus do not slide with respect to the springs or stools. Thus, in the suspension system of the present invention, although the springs are in sliding engagement with the stools, either directly or indirectly via the resilient pads, inasmuch as relative sliding movement is possible, in practice such movement may not occur.

Thus if such a suspension is subjected to a fluctuating load, e.g. by an uneven road surface, the evenness of the shear characteristics of the elastomeric material results in smooth movement of the springs and thus in a substantially smoother ride of the vehicle.

The degree of flatness or curvature of the or each spring will of course vary with the load on it and the spring(s) cannot be flat under all loads. They should however be flat, ie. their neutral axis should be straight, at some point in their working load range. Thus they may be upwardly arched when unloaded and flat when fully loaded or flat when unloaded and downwardly arched when fully loaded. It is however preferred that they are upwardly arched when unloaded, symmetrically downwardly arched when fully loaded and substantially flat when subjected to half the maximum load. The vertical movement of the centre of each spring with respect to its ends is typically 20 to 30mms. When fully loaded each spring may carry a load of 3 to 5 tonnes.

The or each trailing arm has a pivotal connection only at its end remote from the associated axle. In the known suspension systems the axle tends to rotate about the pivotal axis at the near end of the trailing arm under heavy braking loads but by the simple elimination of this pivotal axis rotation is only possible, even theoretically, about the remaining axis at the far end of the trailing arm. However, due to the very substantial increase in the length of the lever arm, i.e. the distance from the axle to the pivotal axis, such pivotal movement is in fact eliminated or very substantially reduced. This means that the balance beam(s) are not forced far from their equilibrium position under heavy braking and thus that they can reliably perform their load equalising function whereby all the axles of a multiple axle system will be substantially equally loaded at all times. This means in turn that the braking forces exerted at all the axles is substantially the same. Furthermore, axle hopping is substantially positively prevented in both single and multiple axle systems.

However, the ability to effect relative pivotal movement of the leaf spring(s) and the associated axle is still desirable so as, amongst other reasons, to minimise the energy stored in the spring(s) from undesirable effects, e.g. compression and tension, and to facilitate the transmission of torque from one end to the other and thus instead of the leaf spring(s) and axle(s) being rigidly connected as previously they are connected by way of a pivotal joint. Whilst this may constitute a conventional pivot pin and socket, since only very limited pivotal movement is required it may take a variety of forms and all that is necessary is that slight relative angular displacement is possible. Thus the interposition of an elastomeric pad between the leaf spring(s) and the associated axle may be sufficient.

It is readily possible to convert a suspension system of known type to be in accordance with the present invention. If the usual arched springs are replaced by substantially flat springs this will leave a relatively large gap between the springs and axles which can readily accommodate a pivotal joint of the appropriate type.

The present invention also embraces a vehicle, such as a heavy goods trailer, including a suspension system of the type described above.

Further features and details of the invention will be apparent from the following description of one specific example which is given with reference to Figure 4 of the accompanying drawings which is a diagrammatic side elevation of a tandem axle suspension system of known type similar to that shown in Figures 2 and 3 which has been converted to be in accordance with the invention. The same reference numerals are used to designate similar parts throughout the drawings.

As may be seen, the leaf springs 4,4' are substantially straight and the leading end of the leading spring and the trailing end of the trailing spring are engaged by the stools 8 and 10 via an elastomeric pad 30 which may be between 20 and 80mm thick. Connected to the underside of the centre of each spring by an appropriate bracket is a plate 32 which overlaps in part with a plate 34 rigidly connected to the associated trailing arm. The two plates are pivotally connected by a pivot pin 36. The trailing arms 14,14' are generally similar to before and may be of adjustable length but are non-rotatably or rigidly connected, e.g. by a multi-point connection or by welding to the axles 2,2' and have only a single pivotal connection, namely via the pins 16,16' at their ends remote from the axles. If a multi-point connection of the trailing arms is used, elastomeric bushings may be employed whereby pivotal movement is prevented but a certain compliance or resilience is provided.

The suspension system in accordance with the invention may have any number of axles and if it is of single axle type will be of similar appearance to that in Figure 1 except that the leaf spring 4 will be substantially flat, the pivotal connection 16 will be replaced by a rigid connection and a pivotal connection 32 will be interposed between the axle 2 and the leaf spring 4. A resilient pad, which should be appropriately shaped to ensure contact with the leaf spring and stool over a substantial area, will preferably also be interposed between the stools 8 and 10 and the ends of the leaf spring 4.

The damping characteristic of a suspension system in accordance with the invention is less than that of known suspension systems and is may therefore be desirable to introduce shock absorbers or viscous dampers between the axles and the chassis to optimise the performance of the suspension system, particularly at higher road speeds.

In use, the maximum horizontal movement of the ends of the springs under changing loads and pitch (axle displacement) is only of the order of 2 to 3mm and this is accommodated without sliding solely by lateral deformation of the elastomeric pads 30. The dynamic load factor for each axle is substantially improved. Under heavy braking, rotation of the axles is substantially restrained and thus the load on the axles, in the case of a multiple axle system, is maintained substantially equal. Axle hopping is eliminated and the tyres are thus maintained in permanent intimate contact with the road whereby both the braking distance and damage to the road are minimised.

## Claims

1. A single axle suspension system including a leaf spring (4) which is connected to the axle (2), two stools (8,10) which are connected to the chassis (20) of the vehicle and which are slidably supported by respective ends of the leaf spring and a trailing arm (14) which is pivotally connected to the leading stool (8) or a member connected thereto and is connected to the axle (2) or a member connected thereto characterised in that the leaf spring (4) is substantially straight, that the trailing arm (14) is rigidly connected to the axle (2) or a member rigidly connected thereto and that the leaf spring (4) is connected to the axle (2) via a pivotal joint (36).

2. A system as claimed in claim 1 characterised in that a resilient pad (30) is interposed between each stool (8,10) and the ends of the leaf spring.

3. A multiple axle suspension system including two or more leaf springs (4,4') which are connected to respective axles (2,2'), two stools (8,10) which are connected to the vehicle chassis (20) and which are slidably supported by the leading end of the leading leaf spring (4) and the trailing end of the trailing leaf spring (4'), respectively, the remaining ends of the leaf springs being slidably supported by a respective end of one or more balance beams (22) mounted on a respective further stool (26) to pivot about an axis substantially parallel to the axles (2,2'), and a respective trailing arm (14,14') connected to each axle (2,2') or a member connected thereto and to the stool (8,26) ahead of it or a member connected thereto characterised in that each leaf spring (4,4') is substantially straight, that each trailing arm (14,14') is rigidly connected to the associated axle (2,2') or a member rigidly connected thereto and that each leaf spring (4,4') is connected to the associated axle (2,2') via a pivotal joint (36).

4. A system as claimed in claim 3 characterised in that a resilient pad (30) is interposed between the leading stool (8) and the leading end of the leading leaf spring (4) and between the trailing stool (10) and the trailing end of the trailing leaf spring (4').

## Patentansprüche

1. Einachsaufhängung mit einer Blattfeder ( 4), die mit der Achse (2) verbunden ist, zwei Spannplatten (8, 10), die mit dem Fahrgestell (20) des Fahrzeuges verbunden und die durch die betreffenden Enden der Blattfeder verschiebbar abgestützt sind, und einem Nachlaufarm (14), der mit der vorderen Spannplatte (8) oder einem damit verbundenen Bauteil schwenkbar verbunden ist und der mit der Achse (2) oder einem damit verbundenen Bauteil verbunden ist,
**dadurch gekennzeichnet, daß** die Blattfeder (4) im wesentlichen geradläufig ist, daß der Nachlaufarm (14) starr mit der Achse (2) verbunden ist oder mit einem damit starr verbundenen Bauteil, und daß die Blattfeder (4) mit der Achse (2) über ein Drehlager (36) verbunden ist.

2. Aufhängung nach Anspruch 1, dadurch gekennzeichnet, daß ein elastisches Polster (30) zwischen jeder Spannplatte (8, 10) und den Enden der Blattfeder angeordnet ist.

3. Mehrfachaufhängung mit zwei oder mehr Blattfedern (4, 4'), die mit betreffenden Achsen (2, 2') verbunden sind, zwei Spannplatten (8, 10), die mit dem Fahrzeugfahrgestell (20) verbunden und durch das vordere Ende der vorderen Blattfeder (4) sowie das hintere Ende der hinteren Blattfeder (4') verschiebbar abgestützt sind, wobei die verbleibenden Enden der Blattfedern durch ein betreffendes Ende eines oder mehrerer Gleichgewichtsträger (22) abgestützt sind, die an einer betreffenden weiteren Spannplatte (26) für ein Schwenken um eine Achse im wesentlichen parallel zu den Achsen (2, 2') montiert ist, und einem betreffenden Nachlaufarm (14, 14'), der mit jeder Achse (2, 2') oder einem damit verbundenen Bauteil oder mit der vor ihm angeordneten Spannplatte (8, 26) oder einem damit verbundenen Bauteil verbunden ist,
**dadurch gekennzeichnet, daß** jede Blattfeder (4, 4') im wesentlichen geradläufig ist, daß jeder Nachlaufarm (14, 14') starr mit der zugeordneten Achse (2, 2') verbunden ist oder mit einem damit starr verbundenen Bauteil, und daß jede Blattfeder (4, 4') mit der zugeordneten Achse (2, 2') über ein Drehlager (36) verbunden ist.

4. Aufhängung nach Anspruch 3, dadurch gekennzeichnet, daß ein elastisches Polster (30) zwischen der vorderen Spannplatte (8) und dem vorderen Ende der vorderen Blattfeder (4) und zwischen der hinteren Spannplatte (10) und dem hinteren Ende der hinteren Blattfeder (4') angeordnet ist.

## Revendications

1. Système de suspension à essieu unique comprenant un ressort à lames (4) qui est connecté à l'essieu (2), deux tabourets (8,10) qui sont connectés au châssis (20) du véhicule et qui sont supportés à coulissement par des extrémités respectives du ressort à lames, et un bras arrière (14) qui est connecté à pivotement au tabouret antérieur (8) ou à un élément qui lui est connecté et qui est connecté à l'essieu (2) ou à un élément qui lui est connecté, caractérisé en ce que le ressort à lames (4) est sensiblement plat, en ce que le bras arrière (14) est connecté rigidement à l'essieu (2) ou à élément qui lui est connecté rigidement, et en ce que le ressort à lame (4) est connecté à l'essieu (2) par l'intermédiaire d'une articulation pivotante (36).

2. Système selon la revendication 1 caractérisé en ce qu'un coussin élastique (30) est interposé entre chaque tabouret (8,10) et les extrémités du ressort à lames.

3. Système de suspension à essieux multiples comprenant deux ou plusieurs ressorts à lames (4,4') qui sont connectés à des essieux respectifs (2,2'), deux tabourets (8,10) qui sont connectés au châssis (20) de véhicule et qui sont supportés à coulissement par l'extrémité antérieure du ressort à lames antérieur (4) et l'extrémité postérieure du ressort à lames postérieur (4'), respectivement, les extrémités restantes des ressorts à lames étant supportées à coulissement par une extrémité respective d'une ou plusieurs poutres d'équilibrage (22) montées sur un tabouret supplémentaire respectif (26) pour pivoter autour d'un axe sensiblement parallèle aux essieux (2,2'), et un bras arrière respectif (14,14') connecté à un essieu (2,2') ou à un élément qui lui est connecté et connecté au tabouret (8,26) en avant de celui-ci ou à un membre qui lui est connecté, caractérisé en ce que chaque ressort à lames (4,4') est sensiblement plat, en ce que chaque bras arrière (14,14') est connecté rigidement à l'essieu associé (2,2') ou à un élément qui lui est connecté rigidement, et en ce que chaque ressort à lames (4,4') est connecté à l'essieu associé (2,2') par l'intermédiaire d'une articulation pivotante (36).

4. Système selon la revendication 3 caractérisé en ce qu'un coussin élastique (30) est interposé entre le tabouret antérieur (8) et l'extrémité antérieure du ressort à lames antérieur (4) et entre le tabouret postérieur (10) et l'extrémité postérieure du ressort à lames postérieur (4').
